# EUROPEAN PATENT APPLICATION

(11) **EP 4 831 013 A1**
(43) Date of publication of application: **28.10.2026**
(21) Application number: 24906137.5
(22) Date of filing: 06.12.2024
(51) Int. Cl.: B60R 21/231, B60R 21/2334

(54) **AIRBAG APPARATUS, CONTROL METHOD FOR AIRBAG APPARATUS, AND VEHICLE**

(30) Priority: 20.12.2023 CN 202311766884
(71) Applicant: Yanfeng International Automotive Technology Co., Ltd., Shanghai 201306 (CN)
(72) Inventor: LI, Yang, Shanghai 201315 (CN); QI, Jihao, Shanghai 201315 (CN); WAN, Zhijun, Shanghai 201315 (CN)
(74) Representative: Reitstötter Kinzebach
(86) International application number: PCT/CN2024/137306
(87) International publication number: WO 2025/130653

(57) **Abstract**

The present application discloses an airbag apparatus, a control method for an airbag apparatus, and a vehicle. The airbag apparatus comprises a first chamber, a second chamber, and a blocking piece assembly. A communication channel is provided between the first chamber and the second chamber. The blocking piece assembly is located in the first chamber, and comprises a blocking piece body and a pull strap assembly connected to the blocking piece body. In a first operation mode, the pull strap assembly is released; the blocking piece body blocks the communication channel; the first chamber is separated from the second chamber; and only the first chamber is opened. In a second operation mode, the pull strap assembly is fixed; the pull strap assembly applies tension to the blocking piece body; at least part of the blocking piece body deviates from the communication channel; and the first chamber and the second chamber are in communication and both are opened.

## Description

### Technical Field

The present application relates to the technical field of vehicles, and in particular, to an airbag device. The present application also relates to a method for controlling the airbag device, and a vehicle.

### Background

Vehicles are often equipped with airbag devices. When a vehicle is involved in a collision, the airbag of the airbag device will be inflated immediately to protect the occupant in his seat.

In some vehicles, seats may provide occupants with a variety of sitting postures, thereby allowing the occupants to enjoy a more comfortable riding experience. Depending on the occupant's sitting postures, the distance from the occupant to the airbag device varies, and in some cases, the distance from the occupant to the airbag device is relatively long. The airbag device is usually equipped with a tether which allows the airbag to have different volumes after inflation to accommodate different distances between the occupant and the airbag device. For example, in a first case where the distance between the occupant and the airbag device is relatively short, the tether is tensioned to restrain the airbag to have a smaller first inflated volume when the airbag is inflated. In a second case where the distance between the occupant and the airbag device is relatively long, the tether is released or destroyed when the airbag is inflated, and the airbag is not restrained and is inflated to have a larger second inflated volume. However, in the first case as described above, the tether may be destroyed due to the excessive air pressure in the airbag, leading to over-inflation of the airbag, and even potentially causing injury to the occupant.

### Summary

Regarding the above technical problem, a first aspect of this application provides an airbag device. The airbag device includes a first chamber, a second chamber located outside the first chamber, and a blocking assembly. A communication channel is provided between the first chamber and the second chamber. The blocking assembly is arranged in the first chamber and includes a blocking body and a tether assembly; a first end of the tether assembly is connected to the blocking body, and a second end is adapted to be released or restrained, so that the blocking body is adapted to block or open the communication channel. In a first operation mode, the second end of the tether assembly is released, the blocking body blocks the communication channel, the first chamber is separated from the second chamber, and only the first chamber is inflated; and in a second operation mode, the second end of the tether assembly is restrained, the blocking body is pulled by the tether assembly to cause at least part of the blocking body to deviate from the communication channel, the communication channel is opened, and the first chamber and the second chamber are in communication and both inflated.

In an embodiment, the airbag device further includes: an airbag body defining an inflation space, and at least one separator sheet; the separator sheet is arranged in the inflation space and connected to the airbag body to divide the inflation space into the first chamber and the second chamber, and the separator sheet is configured with a first communication opening used as the communication channel.

In an embodiment, the airbag body includes a first airbag for forming the first chamber and a second airbag for forming the second chamber; the first airbag includes a mounting area used as the separator sheet, and the second airbag is configured with at least one second communication opening; the second airbag is arranged outside the first airbag and mounted on the mounting area, and the second communication opening is docked with the first communication opening.

In an embodiment, the first communication opening is within a range of the second communication opening.

In an embodiment, the airbag body is integrally formed, and the airbag body and the separator sheet are formed independently and assembled together.

In an embodiment, the airbag device further includes a first connection structure, and the first communication opening is within a range defined by the first connection structure; in the first operation mode, the first connection structure remains intact to connect the blocking body to the separator sheet; and in the second operation mode, the first connection structure is destroyed, and at least part of the blocking body is separated from the separator sheet and deviates from the first communication opening.

In an embodiment, the first connection structure is arranged along an edge of the first communication opening.

In an embodiment, the airbag device further includes a second connection structure adapted to connect the wall of the second chamber to the separator sheet; in the first operation mode, the second connection structure remains intact and connects the wall of the second chamber to the separator sheet; and in the second operation mode, the second connection structure is destroyed, so that the first chamber and the second chamber are inflated.

In an embodiment, the second connection structure is further adapted to connect the wall of the second chamber and the blocking body to the separator sheet; in the first operation mode, the second connection structure remains intact and connects the wall of the second chamber and the blocking body to the separator sheet; and in the second operation mode, the second connection structure is destroyed, so that at least part of the blocking body deviates from the communication channel, and the first chamber and the second chamber are inflated.

In an embodiment, the airbag device further includes a third connection structure offset from the first communication opening, and in the first operation mode and the second operation mode, the third connection structure remains intact and connects the blocking body to the separator sheet.

In an embodiment, the blocking body includes a first edge portion and a second edge portion opposite to the first edge portion, the third connection structure is arranged along the first edge portion, and the first end of the tether assembly is connected to the second edge portion.

In an embodiment, the third connection structure is arranged in a middle of the blocking body to divide the blocking body into two sub-sheets; at least two communication openings are configured and correspond to the two sub-sheets respectively, and the tether assembly includes two first ends which are respectively connected to the two sub-sheets.

In an embodiment, an elongation rate of the blocking body is equal to an elongation rate of the separator sheet.

In an embodiment, the airbag device further includes an activation mechanism, and the second end of the tether assembly is adapted to be connected to the activation mechanism; in the first operation mode, the activation mechanism is actuated to release the second end of the tether assembly, and in the second operation mode, the activation mechanism is unactuated to restrain the second end of the tether assembly.

In an embodiment, the tether assembly includes: a first tether connected to the blocking body, and a second tether having a first end connected to the first tether and a second end connected to the activation mechanism.

In an embodiment, the tether assembly includes a plurality of first tethers, and the first end of the second tether is connected to the plurality of first tethers.

In an embodiment, the airbag device further comprises two gas generators, where in the first operation mode, one of the two gas generators inflates into the airbag body, and in the second operation mode, the two gas generators inflate into the airbag body.

A second aspect of this application provides a method for controlling an airbag device. The airbag device includes a first chamber, a second chamber located outside the first chamber, and a blocking assembly; a communication channel is provided between the first chamber and the second chamber; the blocking assembly is arranged in the first chamber and includes a blocking body and a tether assembly, the first end of the tether assembly is connected to the blocking body, and the second end of the tether assembly is adapted to be released or restrained. The method includes: obtaining a distance between an occupant and the airbag device; determining whether the distance is greater than a preset distance; if not, the second end of the tether assembly is released, the blocking body blocks the communication channel, the first chamber is separated from the second chamber, and only the first chamber is inflated; and if so, the second end of the tether assembly is restrained, and the blocking body is pulled by the tether assembly to cause at least part of the blocking body to deviate from the communication channel, the communication channel is open, and the first chamber and the second chamber are in communication and both inflated.

A third aspect of this application provides a vehicle. The vehicle includes the airbag device as described above.

The beneficial effects of the present application are as follows. According to the airbag device of the present application, the blocking assembly can selectively cause the first chamber to communicate or not communicate with the second chamber, so as to realize that only the first chamber is inflated or both the first chamber and the second chamber are inflated depending on the different distances between the occupant and the airbag device. In this way, the airbag device can protect occupants at different distances from the airbag device. In addition, in the airbag device of the present application, when the distance between the occupant and the airbag device is relatively short (i.e., in the first operation mode), the blocking assembly blocks the communication channel from the interior of the first chamber. The greater the gas pressure in the first airbag, the tighter the blocking assembly blocks the communication channel, so that the gas cannot leak from the first chamber into the second chamber. This helps to prevent the first chamber and the second chamber from being inflated in the first operation mode.

### Brief Description of the Drawings

With the aid of the non-limiting examples of typical embodiments of the present application, the present application will be further described in detail with reference to a plurality of drawings. The drawings are not drawn to actual scale.
FIG. 1 schematically shows a vehicle according to an embodiment of the present application.
FIG. 2 schematically shows an airbag device according to an embodiment of the present application.
FIG. 3a schematically shows a first embodiment of an airbag body, where the airbag body is inflated and has a second inflated volume.
FIG. 3b schematically shows a structure of a second embodiment of an airbag body.
FIG. 4 schematically shows an exploded view of the airbag body shown in FIG. 3a.
FIG. 5 schematically shows an embodiment of a blocking assembly, where a second tether is omitted.
FIG. 6a schematically shows an arrangement of the blocking assembly in the first embodiment of the airbag device.
FIG. 6b schematically shows an arrangement of the blocking assembly in a second embodiment of the airbag device.
FIG. 6c schematically shows an arrangement of the blocking assembly in a third embodiment of the airbag device.
FIG. 7 schematically shows an arrangement of the blocking assembly in an another embodiment of the airbag device.
FIG. 8 schematically shows panels of a first airbag, showing the blocking assembly.
FIG. 9 schematically shows panels of a second airbag.
FIG. 10 schematically shows the first embodiment of the airbag device, where the airbag body has a first inflated volume.
FIG. 11 schematically shows the first embodiment of the airbag device, where the airbag body has a second inflated volume.
FIG. 12 schematically shows the second embodiment of the airbag device, where the airbag body has a first inflated volume.
FIG. 13 schematically shows the second embodiment of the airbag device, where the airbag body has a second inflated volume.
FIG. 14 schematically shows the third embodiment of the airbag device, where the airbag body has a first inflated volume.
FIG. 15 schematically shows the third embodiment of the airbag device, where the airbag body has a second inflated volume.
FIG. 16 schematically shows a fourth embodiment of the airbag device, where the airbag body has a first inflated volume.
FIG. 17 schematically shows the fourth embodiment of the airbag device, where the airbag body has a second inflated volume.
FIG. 18 schematically shows a fifth embodiment of the airbag device, where the airbag body has a first inflated volume.
FIG. 19 schematically shows the fifth embodiment of the airbag device, where the airbag body has a second inflated volume.
FIG. 20 schematically shows a flowchart of a method for controlling the airbag device.
FIG. 21 schematically shows an inflated state of the airbag body when a distance between an occupant and the airbag device is relatively short.
FIG. 22 schematically shows an inflated state of the airbag body when the distance between the occupant and the airbag device is relatively long.

**List of reference numerals**

| | | | |
|---|---|---|---|
| 1 | vehicle | | |
| 10 | seat | 11 | instrument panel assembly |
| 12 | occupant | | |
| 2 | airbag device | | |
| 201 | first chamber | 202 | second chamber |
| 3 | airbag body | | |
| 301 | first connection structure | 302 | second connection structure |
| 303 | third connection structure | 304 | fourth connection structure |
| 305 | fifth connection structure | | |
| 31 | first airbag | | |
| 310 | separator sheet | 311 | first communication opening |
| 313 | gas inlet | 314 | edge portion |
| 317 | first main panel | 318 | first side panel |
| 32 | second airbag | | |
| 321 | second communication opening | 327 | second main panel |
| 328 | second side panel | | |
| 4 | carrier assembly | | |
| 410 | housing | 411 | bottom wall |
| 420 | gas generator | 430 | activation mechanism |
| 5 | blocking assembly | | |
| 51 | blocking body | | |
| 511 | first edge portion | 512 | second edge portion |
| 513 | sub-sheet | | |
| 52 | tether assembly | | |
| 521 | first end of the tether assembly | 522 | second end of the tether assembly |
| 523 | first tether | 524 | second tether |

### Detailed Description

The details presented herein are exemplary and used merely to illustrate the embodiments of the present application, and they are presented to provide what is believed to be the most useful and understandable description of the principles and conceptual aspects of the present application. In this regard, no attempt is made to introduce structural details of the present application beyond what is necessary for a basic understanding of the present application. Those skilled in the art may clearly understand how to implement several forms of the present application in practice through the specification and accompanying drawings.

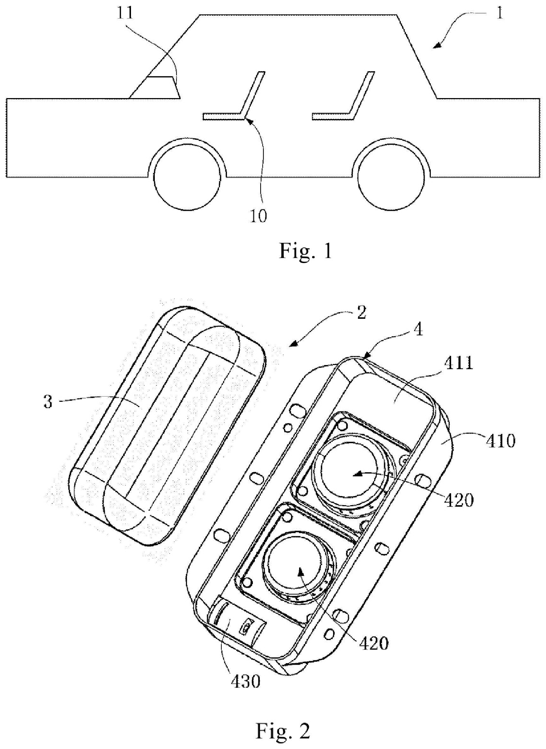

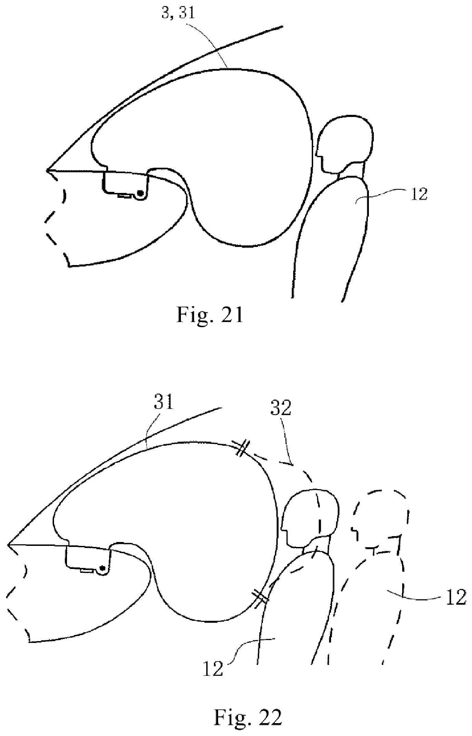

FIG. 1 schematically shows a vehicle 1 according to an embodiment of the present application. As shown in FIG. 1, the vehicle 1 includes a seat 10 and an instrument panel assembly 11 adjacent to the seat 10. An airbag device 2 is disposed in the instrument panel assembly 11. When the vehicle 1 is involved in a collision, the airbag body 3 of the airbag device 2 will be inflated and ejected from the instrument panel assembly 11 to protect the occupant 12 (as shown in FIGS. 21 and 22). It should be understood that the airbag device 2 may also be disposed at other positions in the vehicle 1, such as at the steering wheel. For simplicity, in the present application, the technical solution of the present application is described by taking the airbag device 2 disposed in the instrument panel assembly 11 as an example.

The airbag device 2 will be described below.

The airbag device 2 includes an airbag body 3, a separator sheet 310 connected to the airbag body 3, and a blocking assembly 5 that cooperates with the separator sheet 310.

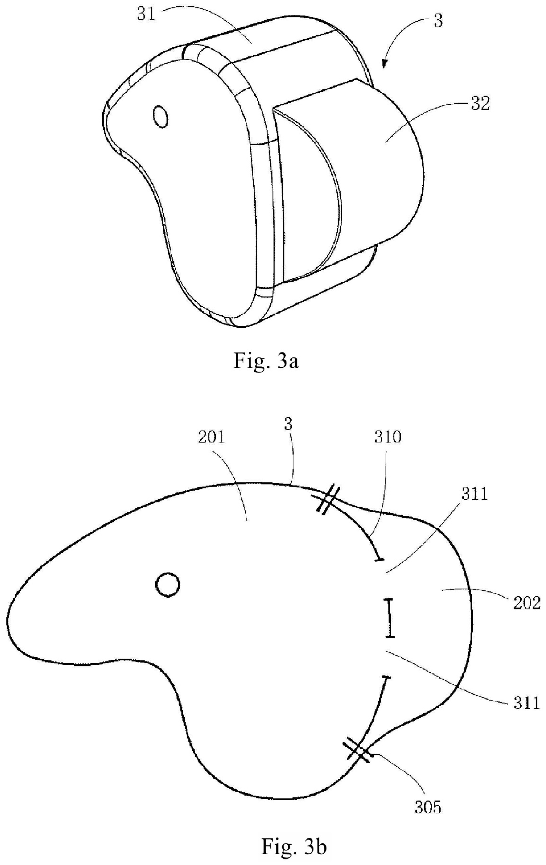

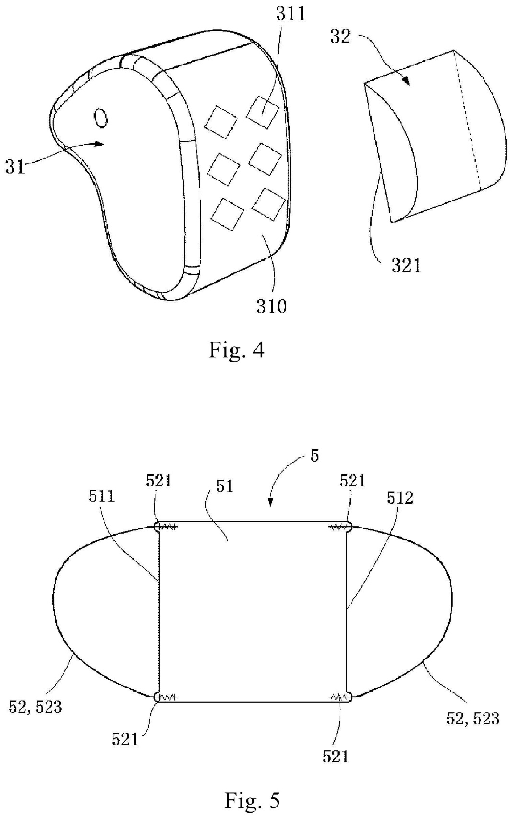

FIGS. 3a and 4 show a first embodiment of the airbag body 3. The airbag body 3 includes a first airbag 31 and a second airbag 32 located outside the first airbag 31. The first airbag 31 defines a first chamber 201 and the second airbag 32 defines a second chamber 202. Specifically, as shown in FIG. 4, the first airbag 31 includes a mounting area that used as the separator sheet 310, and the second airbag 32 is mounted on the separator sheet 310 (or the first airbag 31).

First communication openings 311 are configured on the separator sheet 310, and a second communication opening 321 is configured on the second airbag 32. After the second airbag 32 is mounted on the separator sheet 310, the second communication opening 321 is docked with the first communication openings 311, and the first communication openings 311 form a communication channel between the first airbag 31 and the second airbag 32.

FIG. 3b schematically shows a structure of a second embodiment of the airbag body 3. As shown in FIG. 3b, the airbag device 2 includes an airbag body 3 and a separator sheet 310. The airbag body 3 is an integrally formed component and defines an inflation space. The separator sheet 310 is arranged in the inflation space and connected to the airbag body 3 to divide the inflation space into a first chamber 201 and a second chamber 202. In this case, the separator sheet 310 is configured with the first communication openings 311 that are used as the communication channel. Overall, the airbag body 3 and the separator sheet 310 are formed independently and assembled together.

As shown in FIG. 5, the blocking assembly 5 includes a blocking body 51 and a tether assembly 52. In an initial state (i.e., a state in which the airbag device 2 is not in use), the blocking body 51 is arranged on the separator sheet 310 and blocks the first communication openings 311. The first ends 521 of the tether assembly 52 are connected to the blocking body 51, and the second end 522 is adapted to be released or restrained, so that the blocking body 51 is adapted to block or open the first communication openings 311 (i.e., the communication channel as described above).

The airbag device 2 of the present application has a first operation mode. As shown in FIG. 21, when the distance between the occupant 12 and the airbag device 2 is relatively short (e.g., the inclination angle of the backrest relative to the direction perpendicular to the ground is relatively small, so that the distance between the occupant and the airbag device 2 is relatively short), the airbag device 2 is in the first operation mode. In the first operation mode, when the vehicle 1 is involved in a collision, the second end 522 of the tether assembly is released, so that the tether assembly 52 is in a free state in the first airbag 31 and applies no pulling force to the blocking body 51. In this way, the blocking body 51 is connected to the separator sheet 310 and blocks the first communication openings 311, and thus the first airbag 31 is separated from the second airbag 32. The first airbag 31 is inflated, and the gas cannot flow from the first airbag 31 into the second airbag 32. Overall, only the first airbag 31 is inflated, so that the airbag body 3 has a smaller first inflated volume, thereby protecting the occupant. Moreover, in this process, the greater the gas pressure in the first airbag 31, the better the blocking effect of the blocking body 51 on the first communication openings 311, and the less likely the gas enters the second airbag 32 from the first airbag 31, thereby effectively preventing the airbag body 3 from being excessively inflated.

The airbag device 2 of the present application further has a second operation mode. As shown in FIG. 22, take the occupant 12 shown in the solid line as a reference, when the distance between the occupant 12 (shown in the dashed line) and the airbag device 2 is relatively long (e.g., the inclination angle of the backrest relative to the direction perpendicular to the ground is relatively large, so that the distance between the occupant 12 and the airbag device 2 is relatively long), the airbag device 2 is in the second operation mode. In the second operation mode, when the vehicle 1 is involved in a collision, the second end 522 of the tether assembly 52 is restrained. As the first airbag 31 is inflated, the tether assembly 52 is gradually tightened to pull at least part of the blocking body 51 off the separator sheet 310, causing the at least part of the blocking body 51 to deviate from the first communication openings 311. The gas filled into the first airbag 31 enters the second airbag 32 through the first communication openings 311 (i.e., the communication channel). Overall, both the first airbag 31 and the second airbag 32 are inflated, so that the airbag body 3 has a second inflated volume greater than the first inflated volume, thereby protecting the occupant. Moreover, in this process, the greater the gas pressure in the first airbag 31, the greater the pulling force of the tether assembly 52 on the blocking body 51, and it is easier to pull at least part of the blocking body 51 off the first airbag 31, so that the communication channel is opened.

It can be seen that, according to the airbag device 2 of the present application, when the vehicle 1 is involved in a collision, the blocking assembly 5 causes the first airbag 31 (i.e., the first chamber) and the second airbag 32 (i.e., the second chamber) to be communicated or not communicated based on different distances between the occupant 12 and the airbag device 2. Therefore, the inflated volume of the airbag body 3 varies depending on the distance between the occupant 12 and the airbag device 2, so as to protect occupants at different distances from the airbag device 2 (or the instrument panel assembly 11), and also to protect occupants in sitting postures at different angles. It should be noted that the sizes of the first inflated volume and the second inflated volume may be determined depending on the actual condition, which will not be described herein.

In an embodiment, as shown in FIG. 4, the area of the second communication opening 321 of the second airbag 32 is greater than the area of the first communication openings 311 of the first airbag 31. In this way, when the second airbag 32 is mounted on the separator sheet 310, the first communication openings 311 are within the range of the second communication opening 321. This helps to prevent the gas in the first airbag 31 from leaking out of the airbag body 3 in the second operation mode. In an embodiment, the shape of each of the first communication openings 311 may be any suitable shape such as a circle, an ellipse, or a polygon, which is not limited herein. The same is true for the second communication opening 321.

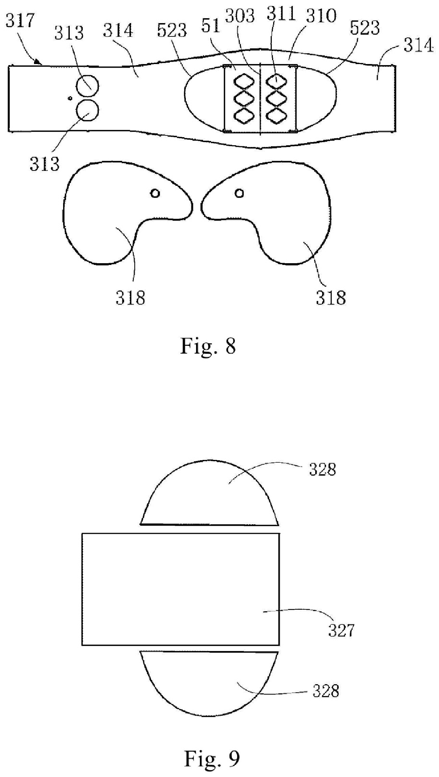

In an embodiment, as shown in FIG. 2, the airbag device 2 further includes a carrier assembly 4 for carrying the airbag body 3. In an embodiment, the carrier assembly 4 includes a housing 410 and two gas generators 420 mounted in the housing 410. The airbag body 3 is folded and disposed in the housing 410. Two gas inlets 313 are formed in the first airbag 31 (as shown in FIG. 8) to communicate the two gas generators 420 with the first airbag 31, so that the gas generators 420 can be used to inflate the airbag body 3. In an embodiment, in the first operation mode, only one of the two gas generators 420 inflates the airbag body 3, and in the second operation mode, the two gas generators 420 simultaneously inflate the airbag body 3. It should be understood that other numbers of gas generators 420 may also be provided, and the types of the gas generators 420 are not limited, which is not described herein.

Optionally, as shown in FIG. 2, the carrier assembly 4 further includes an activation mechanism 430 disposed on the bottom wall 411 of the housing 410. The activation mechanism 430 is connected to the second end 522 of the tether assembly 52. In the first operation mode, the activation mechanism 430 is actuated to release the second end 522 of the tether assembly 52, so that the blocking body 51 blocks the first communication openings 31, and thus the communication channel is closed. In the second operation mode, the activation mechanism 430 is not actuated to restrain the second end 522 of the tether assembly 52, so that at least part of the blocking body 51 is pulled off the first airbag 31 by the tether assembly 52 and deviates from the first communication openings 31, and thus the communication channel is open. The activation mechanism 430 is well known to those skilled in the art and is not described herein. It should be understood that, depending on the actual condition, the activation mechanism 430 may be also disposed in other positions of the housing 410.

The first embodiment of the airbag device will be described below.

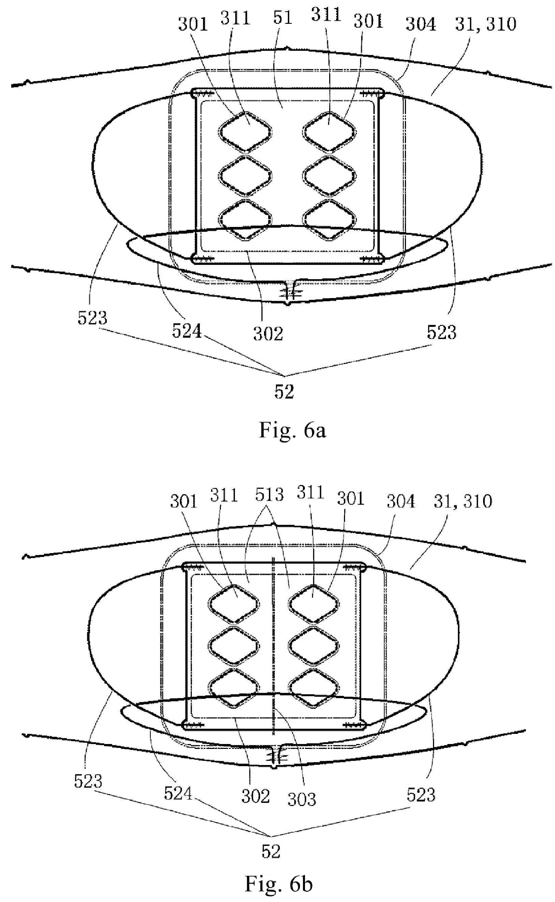

The airbag device is equipped with the first embodiment of the airbag body. As shown in FIG. 6a, the blocking body 51 is substantially rectangular. In the initial state and the first operation mode of the airbag device, the blocking body 51 is fixed on the separator sheet 310 by first connection structures 301 and blocks the first communication openings 311. In the second operation mode, the first connection structures 301 are destroyed, so that the blocking body 51 deviates from the first communication openings 311 (which will be described in detail below). It should be noted that, in addition, the blocking body 51 may also be any other suitable shape, such as a circle, an ellipse, or other polygons, which is not limited herein. The shape of the each of the first communication openings 311 is also not limited in this application.

As also shown in FIG. 6a, the first connection structures 301 are respectively arranged around the edges of the first communication openings 311, so as to ensure that the blocking body 51 blocks the first communication openings 311. In addition, during the manufacture of the airbag body 3, the first communication openings 311 also respectively provide alignment standards for the arrangements of the first connection structures 301, which facilitates the manufacture of the airbag body 3. It should be understood that depending on the actual condition, an appropriate gap may also exist between each of the first connection structures 301 and the edge of the corresponding one of the first communication openings 311, which is not limited herein. In other embodiments, the first connection structures 301 may also be arranged in any other directions, as long as they are offset from the first communication openings 311, which is not described herein.

The first connection structures 301 are sewing structures, that is, the blocking assembly 5 is sewed to the separator sheet 310 through sutures. In other embodiments, the first connection structures 301 may also be adhesive structures or welding structures. For simplicity, this application will take the first connection structures 301 in the form of sewing structures as an example for description.

The second airbag 32 is fixedly connected to the first airbag 31 through a fourth connection structure 304. For example, the fourth connection structure 304 is arranged generally along the second communication opening 321, and the first connection structures 301 are within the area defined by the fourth connection structure 304. In the first operation mode and the second operation mode, the fourth connection structure 304 remains intact to stably connect the second airbag 32 to the first airbag 31. The fourth connection structure 304 is similar in form to the each of the first connection structures 301, and is not described herein.

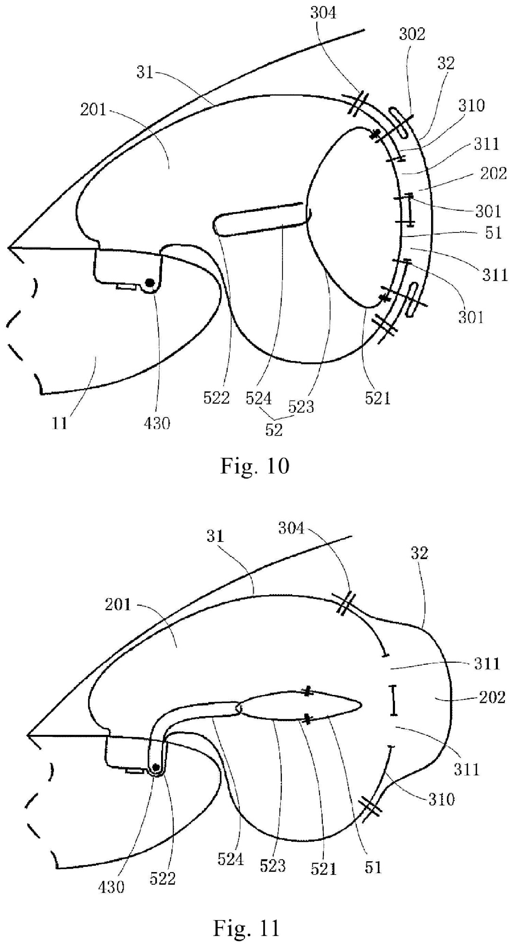

As also shown in FIGS. 6a and 10, the airbag device 2 further includes a second connection structure 302. In the initial state and the first operation mode of the airbag device, the second airbag 32 is folded and connected to the separator sheet 310 (or the first airbag 31) through the second connection structure 302, so that the second airbag 32 is pre-fixed, and the second connection structure 302 further connects the blocking body 51 to the separator sheet 310 (or the first airbag 31). In an embodiment, the second connection structure 302 is located between the first connection structures 301 and the fourth connection structure 304, so that the second connection structure 302 connects both the second airbag 32 and the blocking body 51 to the separator sheet 310 (as shown in FIG. 10). During transportation or assembly of the airbag device 2, the second airbag 32 is fixed in a neat folded state by the second connection structure 302 and will not unfold, which facilitates the transportation and assembly operations of an operator. It should be understood that, in the first operation mode, the second connection structure 302 remains intact; however, in the second operation mode, the second connection structure 302 is destroyed, and both the first airbag 31 and the second airbag 32 are inflated.

In an embodiment, the second connection structure 302 is also a sewing structure, with sutures sewing the second airbag 32 and the blocking body 51 to the first airbag 31. Of course, the second connection structure 302 may also be an adhesive structure or a welding structure, which is not described herein.

In an embodiment, the connection strength of the second connection structure 302 is less than or equal to the connection strength of the first connection structures 301 to ensure that the second connection structure 302 is also destroyed when the first connection structures 301 are destroyed. Of course, the connection strength of the second connection structure 302 may also be greater than the connection strength of the first connection structures 301, as long as the first connection structures 301 and the second connection structure 302 are destroyed in the second operation mode.

As also shown in FIGS. 6a, 10 and 11, the tether assembly 52 includes first tethers 523 and a second tether 524 connected to the first tethers 523. The first tethers 523 are connected to the blocking body 51, for example, connected to the vertices of the blocking body 5 (thus, the ends of the first tethers 523 connected to the blocking body 51 form the first ends 521 of the tether assembly 52). The first end of the second tether 524 is connected to the first tethers 523, and the second end is connected to the activation mechanism 430 and is restrained or released by the activation mechanism 430 (thus the second end of the second tether 524 forms the second end 522 of the tether assembly 52). Generally, the activation mechanism 430 has specific requirements for a tether assembled thereto. According to the solution of the present application, only the second tether 524 is necessary to be selected to be compatible with the activation mechanism 430, which facilitates the manufacture of the airbag device 2. Of course, the first tethers 523 may also be directly connected to the activation mechanism 430 depending on the actual condition, and thus the second tether 524 is not required.

In the first operation mode, as shown in FIG. 10, the activation mechanism 430 is actuated to release the second end 522 of the tether assembly 52, so that the tether assembly 52 (i.e., the first tethers 523 and the second tether 524) is in a free state in the first airbag 31 and applies no pulling force to the blocking body 51, and the first connection structures 301 and the second connection structure 302 are not destroyed. The blocking body 51 is connected to the separator sheet 310 and blocks the first communication openings 311. The gas generators 420 inflate the first airbag 31, and the gas cannot flow from the first airbag 31 into the second airbag 32. Overall, only the first airbag 31 is inflated, so that the airbag body 3 has the first inflated volume.

In the second operation mode, as shown in FIG. 11, the activation mechanism 430 is not actuated and restrains the second end 522 of the tether assembly 52. The gas generators 420 inflate the first airbag 31. As the first airbag 31 is inflated, the tether assembly 52 is gradually tightened and applies a pulling force to the blocking body 51 to destroy the first connection structures 301 and the second connection structure 302. Thus the blocking body 51 is pulled off the separator sheet 310, and the first communication openings 311 are opened. The gas in first airbag 31 enters the second airbag 32 through the first communication openings 311. Overall, both the first airbag 31 and the second airbag 32 are inflated, so that the airbag body 3 has the second inflated volume.

In an embodiment, the elongation rate of the blocking body 51 is equal to the elongation rate of the separator sheet 310 (or the first airbag 31). In this way, the blocking body 51 can be easily pulled off the separator sheet 310 (or the first airbag 31) in the second operation mode. In an embodiment, the blocking body 51 and the separator sheet 310 (or the first airbag 31) are made of the same material (e.g., nylon or polyester fabric). It should be understood that the equality between the elongation rate of the blocking body 51 and the elongation rate of the separator sheet 310 is not mathematically equal. In fact, there may be a slight difference between the two, as long as the difference does not affect the quick detachment of the blocking body 51 from the separator sheet 310.

The second embodiment of the airbag device will be described below.

The second embodiment of the airbag device is equipped with the first embodiment of the airbag body, and is similar to the first embodiment of the airbag device. The main differences between the two will be described below. As shown in FIG. 6b, the airbag device 2 further includes a third connection structure 303, and the third connection structure 303 is also used to connect the blocking body 51 and the separator sheet 310. The third connection structure 303 is located in the middle of the blocking body 51 and is offset from the first communication openings 311 and the first connection structures 301. Overall, the blocking body 51 includes two sub-sheets 513 located on both sides of the third connection structure 303. In this case, there are two first tethers 523, and the two first tethers 523 are respectively connected to the two sub-sheets 513.

The third connection structure 303 is similar to the each of the first connection structures 301, and may be, for example, a sewing structure. However, the connection strength of the third connection structure 303 is greater than the connection strength of the first connection structures 301.

As also shown in FIG. 6b, there are six first communication openings 311 which are evenly distributed on both sides of the third connection structure 303. Each of the sub-sheets 513 is adapted to cover or deviate from the corresponding three first communication openings 311. Of course, other numbers of the first communication openings 311 may also be configured, which is not described herein.

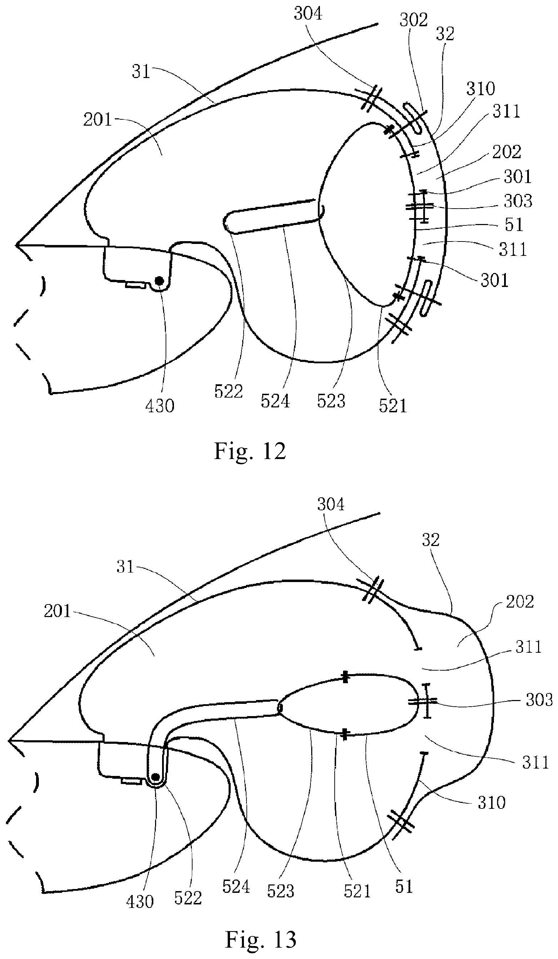

In the first operation mode, as shown in FIG. 12, the activation mechanism 430 is actuated and releases the second end 522 of the tether assembly 52. The tether assembly 52 is in a free state in the first airbag 31, and the first connection structures 301, the second connection structure 302 and the third connection structure 303 are not destroyed. The blocking body 51 is connected to the separator sheet 310 and blocks the first communication openings 311. The gas generators 420 inflate the first airbag 31, and the gas cannot flow from the first airbag 31 into the second airbag 32. Finally, only the first airbag 31 is inflated, so that the airbag body 3 has the first inflated volume.

In the second operation mode, as shown in FIG. 13, the activation mechanism 430 is not actuated and restrains the second end 522 of the tether assembly 52. The gas generators 420 inflate the first airbag 31. As the first airbag 31 is inflated, the tether assembly 52 applies a pulling force to the blocking body 51 to destroy the first connection structures 301 and the second connection structure 302. The third connection structure 303 is not destroyed and still connects the blocking body 51 to the separator sheet 310. In this way, the two sub-sheets 513 respectively deviate from the corresponding first communication openings 311, so that the first communication openings 311 are opened. The gas in the first airbag 31 enters the second airbag 32 through the first communication openings 311. Finally, both the first airbag 31 and the second airbag 32 are inflated, so that the airbag body 3 has the second inflated volume.

In addition, in the second operation mode, the third connection structure 303 and the tether assembly 52 constrain the blocking body 51 to prevent the blocking body 51 from freely moving in the first airbag 31 and blocking the first communication openings 311.

The third embodiment of the airbag device will be described below.

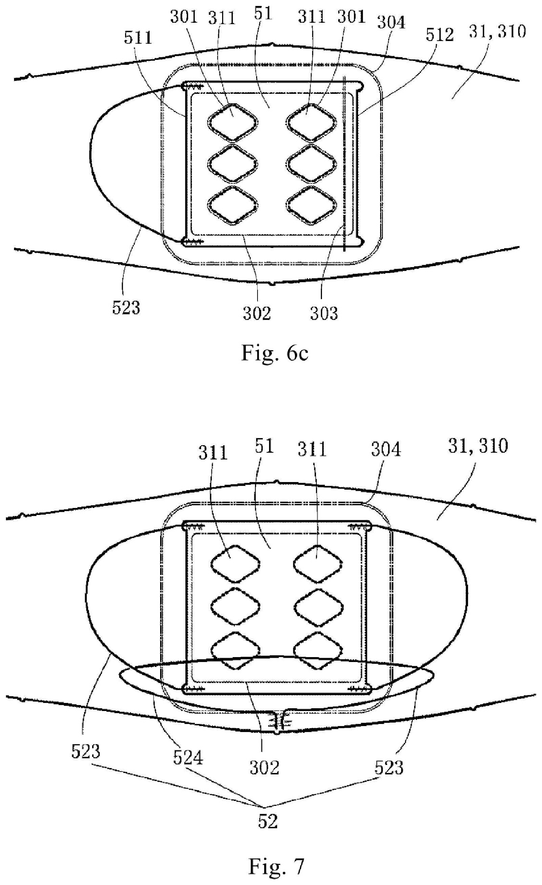

The third embodiment of the airbag device is equipped with the first embodiment of the airbag body, and is similar to the second embodiment of the airbag device. The differences between the two will be described below. As shown in FIG. 6c, the blocking body 51 includes a first edge portion 511 and a second edge portion 512 opposite to the first edge portion 511. For example, the blocking body 51 is rectangular in shape, and the first edge portion 511 and the second edge portion 512 are two opposite edges of the rectangle. The third connection structure 303 is close to the second edge portion 512 of the blocking body 51 and is offset from the first communication openings 311 and the first connection structures 301. The tether assembly 52 includes only one first tether 523, and two ends of the first tether 523 are respectively connected to the first edge portion 511 and the activation mechanism 430 (that is, the first end 521 of the tether assembly 52 is connected to the first edge portion 511, and the second end 522 is connected to the activation mechanism 430).

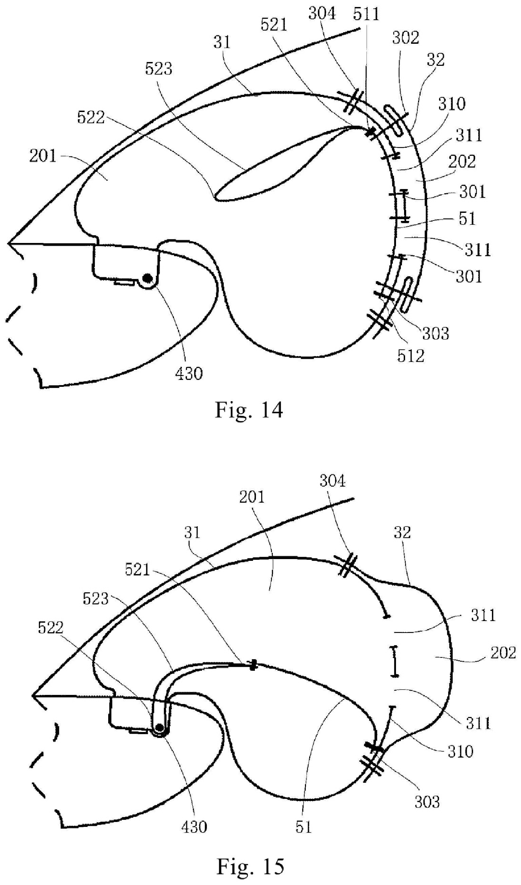

In the first operation mode, as shown in FIG. 14, the activation mechanism 430 is actuated and releases the second end 522 of the tether assembly 52. The tether assembly 52 is in a free state in the first airbag 31, and the first connection structures 301, the second connection structure 302 and the third connection structure 303 are not destroyed. The blocking body 51 is connected to the separator sheet 310 and blocks the first communication openings 311. The gas generators 420 inflate the first airbag 31, and the gas cannot flow from the first airbag 31 into the second airbag 32. Finally, only the first airbag 31 is inflated, so that the airbag body 3 has the first inflated volume.

In the second operation mode, as shown in FIG. 15, the activation mechanism 430 is not actuated and restrains the second end 522 of the tether assembly 52. The gas generators 420 inflate the first airbag 31. As the first airbag 31 is inflated, the tether assembly 52 applies a pulling force to the blocking body 51 to destroy the first connection structures 301 and the second connection structure 302. The third connection structure 303 is not destroyed and still connects the blocking body 51 to the separator sheet 310. In this way, the blocking body 51 deviates from the first communication openings 311, so that the first communication openings 311 are opened. The gas in the first airbag 31 enters the second airbag 32 through the first communication openings 311. Finally, both the first airbag 31 and the second airbag 32 are inflated, so that the airbag body 3 has the second inflated volume.

Similar to the second embodiment of the blocking assembly, in the second operation mode, the third connection structure 303 and the tether assembly 52 of the third embodiment of the blocking assembly constrain the blocking body 51 to prevent the blocking body 51 from freely moving in the first airbag 31 and blocking the first communication openings 311.

The fourth embodiment of the airbag device will be described below.

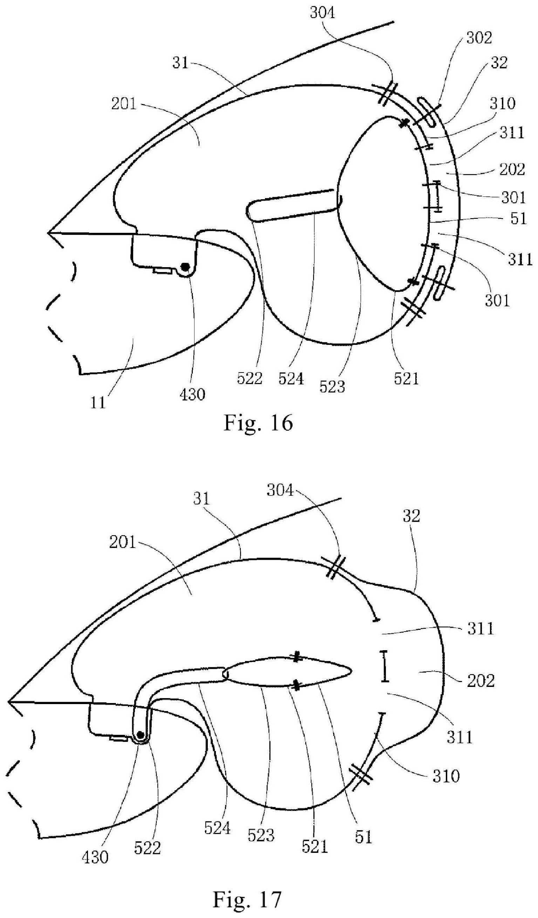

The fourth embodiment of the airbag device is equipped with the first embodiment of the airbag body, and is similar to the first embodiment of the airbag device. Only the differences between the two will be described below. As shown in FIG. 16, in the initial state and the first operation mode of the airbag device, the second airbag 32 is folded and pre-connected to the separator sheet 310 (or the first airbag 31) through the second connection structure 302. It should be noted that the second connection structure 302 is not connected to the blocking body 51.

In the first operation mode, as shown in FIG. 16, the activation mechanism 430 is actuated and releases the second end 522 of the tether assembly 52. The tether assembly 52 is in a free state in the first airbag 31, and the first connection structures 301 and the second connection structure 302 are not destroyed. The blocking body 51 is connected to the separator sheet 310 and blocks the first communication openings 311. The gas generators 420 inflate the first airbag 31, and the gas cannot flow from the first airbag 31 into the second airbag 32. Finally, only the first airbag 31 is inflated, so that the airbag body 3 has the first inflated volume.

In the second operation mode, as shown in FIG. 17, the activation mechanism 430 is not actuated and restrains the second end 522 of the tether assembly 52. The gas generators 420 inflate the first airbag 31. As the first airbag 31 is inflated, the tether assembly 52 applies a pulling force to the blocking body 51 and destroys the first connection structures 301. Thus the blocking body 51 is pulled off the separator sheet 310, and the first communication openings 311 are opened. The gas in the first airbag 31 enters the second airbag 32 through the first communication openings 311. The gas pressure in the second airbag 32 increases, which destroys the second connection structure 302. Finally, both the first airbag 31 and the second airbag 32 are inflated, so that the airbag body 3 has the second inflated volume.

The fifth embodiment of the airbag device will be described below.

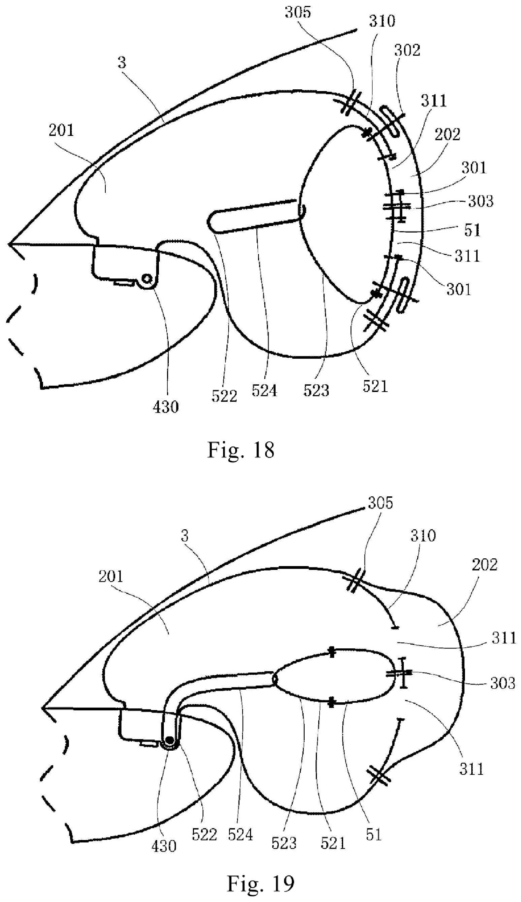

As shown in FIG. 18, the fifth embodiment of the airbag device is equipped with the second embodiment of the airbag body. The airbag body 3 is an integrally formed component, and the separator sheet 310 is an independent component disposed in the inflation space defined by the airbag body 3 and is fixedly connected to the airbag body 3 through a fifth connection structure 305. In this way, the separator sheet 310 divides the inflation space into the first chamber 201 and the second chamber 202. The first communication openings 311 are formed on the separator sheet 310. It should be noted that in the first operation mode and the second operation mode, the fifth connection structure 305 remains intact to stably connect the separator sheet 310 to the first airbag 31. In addition, the fifth connection structure 305 is similar in form to the each of the first connection structures 301, and is not described herein. Other structures of the fifth embodiment of the airbag device are similar to those of the second embodiment of the airbag device, and are not described herein.

In the first operation mode, as shown in FIG. 18, the activation mechanism 430 is actuated to release the second end 522 of the tether assembly 52, so that the tether assembly 52 is in a free state in the first airbag 31 and applies no pulling force to the blocking body 51. The first connection structures 301, the second connection structure 302 and the third connection structure 303 are not destroyed. The blocking body 51 is connected to the separator sheet 310 and blocks the first communication openings 311. The gas generators 420 inflate the first airbag 31, and the gas cannot flow from the first airbag 31 into the second airbag 32. Overall, only the first airbag 31 is inflated, so that the airbag body 3 has the first inflated volume.

In the second operation mode, as shown in FIG. 19, the activation mechanism 430 is not actuated and restrains the second end 522 of the tether assembly 52. The gas generators 420 inflate the first airbag 31. As the first airbag 31 is inflated, the tether assembly 52 applies a pulling force to the blocking body 51 to destroy the first connection structures 301 and the second connection structure 302. The third connection structure 303 is not destroyed and still connects the blocking body 51 to the separator sheet 310. In this way, the two sub-sheets 513 respectively deviate from the first communication openings 311, so that the first communication openings 311 are opened. The gas in the first airbag 31 enters the second airbag 32 through the first communication openings 311. Finally, both the first airbag 31 and the second airbag 32 are inflated, so that the airbag body 3 has the second inflated volume.

It should be also understood that, in other embodiments, the airbag device may only have the first connection structures 301 (referring to FIG. 6a) which connect the blocking body 51 to the separator sheet 310, or connect the blocking body 51 and the second airbag 32 to the separator sheet 310 simultaneously; or may only have the second connection structure 302 (referring to FIG. 7) which connects the blocking body 51 to the separator sheet 310, or connects the blocking body 51 and the second airbag 32 to the separator sheet 310 simultaneously; or may only have the second connection structure 302 and the third connection structure 303 (referring to FIG. 6b and/or FIG. 6c), the third connection structure 303 connects the blocking body 51 to the separator sheet 310, and the second connection structure 302 connects the blocking body 51 to the separator sheet 310, or connects the blocking body 51 and the second airbag 32 to the separator sheet 310 simultaneously; or may only have the first connection structures 301 and the third connection structure 303 (referring to FIG. 6b and/or FIG. 6c), the third connection structure 303 connects the blocking body 51 to the separator sheet 310, and the first connection structures 301 connect the blocking body 51 to the separator sheet 310, or connect the blocking body 51 and the second airbag 32 to the separator sheet 310 simultaneously. The working processes of these airbag devices are similar to that of the first embodiment of the airbag device, and are not described herein.

The manufacture process of the airbag body 3 of the second embodiment of the airbag device will be described below.

As shown in FIG. 5, a blocking assembly 5 is provided. The blocking body 51 of the blocking assembly 5 is substantially rectangular and has a first edge portion 511 and a second edge portion 512 opposite to each other. The tether assembly 52 of the blocking assembly 5 includes two first tethers 523 and one second tether 524. Both ends 521 of one of the two first tethers are connected to the two ends of the first edge portion 511 of the blocking body 51, and both ends 521 of the other of the two first tethers are connected to the two ends of the second edge portion 512 of the blocking body 51. The second tether 524 is connected to the two first tethers 523 (as shown in FIG. 6b).

As shown in FIG. 8, during the manufacture of the first airbag 31, first, one first main panel 317 and two first side panels 318 are provided. The first main panel 317 is substantially strip-shaped (e.g., substantially rectangular) and defines a mounting portion (i.e., the separator sheet 310). The first main panel 317 also has edge portions 314 on both sides of the separator sheet 310 along the length direction of the first main panel 317. Six first communication openings 311 are configured in the separator sheet 310, and two gas inlets 313 are configured in one of the edge portions 314. Next, the blocking body 51 is arranged on the inner side surface of the first main panel 317 and corresponds to the separator sheet 310 to cover the first communication openings 311. A first connection structure 301 is provided along the edge of each of the first communication openings 311, and a third connection structure 303 is provided in the middle of the blocking body 51. In this way, the blocking body 51 is connected to the separator sheet 310 through the first connection structures 301 and the third connection structure 303. The first edge portion 511 and the second edge portion 512 of the blocking body 51 are on both sides of the third connection structure 303, and three first communication openings 311 are distributed on each side of the third connection structure 303. Then, the two first side panels 318 are sewn to the two longitudinal edges (i.e., length edges) of the first main panel 317, respectively, and the two width edges of the first main panel 317 are sewn together. Thus the first airbag 31 as shown in FIG. 4 is manufactured. The blocking assembly 5 is arranged inside the first airbag 31. It should be noted that the second tether 524 is not shown in FIG. 8 for simplicity.

As shown in FIG. 9, during the manufacture of the second airbag 32, first, one second main panel 327 and two second side panels 328 are provided. The second main sheet 327 is substantially strip-shaped (e.g., substantially rectangular). The two second side panels 328 are then sewn to the two length edges of the second main panel 327, respectively, and the two width edges of the second main panel 327 are kept separate. Thus, the second airbag 32 as shown in FIG. 4 is manufactured, and the second airbag 32 has the second communication opening 321.

Next, the second airbag 32 is mounted to the separator sheet 310 of the first airbag 31 through a fourth connection structure 304, and the second communication opening 321 is connected to the first airbag 31. In this way, the airbag body 3 is manufactured.

Optionally, after the second airbag 32 is mounted on the first airbag 31, the second airbag 32 is folded. Then, a second connection structure 302 is provided to pre-fix the second airbag 32 to the separator sheet 310, thereby keeping the second airbag 32 in a folded state. The second connection structure 302 also connects the blocking body 51 and the separator sheet 310 together.

It should be understood that the manufacture processes of the airbag bodies of the other airbag devices are similar to the process described above, and are not described herein.

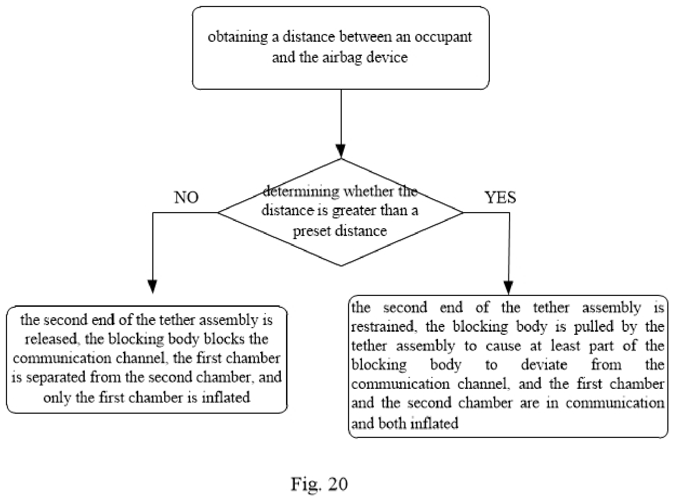

FIG. 20 schematically shows a flowchart of a method for controlling the airbag device. As described above, the airbag device includes a first chamber, a second chamber located outside the first chamber, and a blocking assembly. A communication channel is provided between the first chamber and the second chamber. The blocking assembly is disposed within the first chamber and includes a blocking body and a tether assembly. The first end of the tether assembly is connected to the blocking body, and the second end is adapted to be released or restrained.

As shown in FIG. 20, the method includes the following steps.

Step 1: Obtain a distance between the occupant 12 and the airbag device 2.

Step 2: Determine whether the distance is greater than a preset distance.

In the step 2, if not, the distance between the occupant 12 and the airbag device 2 is relatively short. When the vehicle 1 is involved in a collision, the control device of the vehicle 1 instructs the activation mechanism 430 to be actuated to release the second end 522 of the tether assembly 52, and instructs the gas generators 420 to generate gas to inflate the first airbag 31. The blocking body 51 blocks the communication channel, and the gas cannot flow from the first airbag 31 into the second airbag 32. Finally, only the first airbag 31 is inflated, so that the airbag body 3 has the first inflated volume (as shown in FIG. 19).

In the step 2, if so, the distance between the occupant 12 and the airbag device 2 is relatively long. When the vehicle 1 is involved in a collision, the control device of the vehicle 1 instructs the activation mechanism 430 not to be actuated to restrain the second end 522 of the tether assembly 52, and instructs the gas generators 420 to generate gas to inflate the first airbag 31. The tether assembly 52 is tightened and applies a pulling force to the blocking body 51 to pull at least part of the blocking body 51 away from the communication channel. The gas in the first airbag 31 flows from the first airbag 31 into the second airbag 32 through the communication channel. Finally, both the first airbag 31 and the second airbag 32 are inflated, so that the airbag body 3 has the second inflated volume (as shown in FIG. 20).

In an embodiment, a sensor is mounted in the vehicle 1 to obtain the distance between the occupant 12 and the airbag device 2 as described in the step 1. This is also easily implemented by those skilled in the art, and is not described herein.

In an embodiment, the method may further include other steps preceding the step 1. For example, these other steps may include: obtaining a state of the vehicle 1, and then determining whether the vehicle 1 is about to be involved in a collision. If not, return to continue obtaining the state of the vehicle 1. If so, further determine whether there is an occupant on the seat 10. If it is determined that there is no occupant, the airbag device 2 is controlled not to be activated. If it is determined that there is an occupant, the distance between the occupant 12 and the airbag device 2 is obtained (i.e., the step 1 as described above), and then the step 2 is performed. It should be understood that these other steps are easily implemented by those skilled in the art and is not described herein.

It is noted that this invention (e.g., the inventive concepts, etc.) has been described in the specification and/or illustrated in the drawings of this patent document according to exemplary embodiments; the embodiments of this invention are set forth by way of example only, and are not intended as limitations on the scope of the invention. The structure and/or arrangement of the elements of the inventive concepts embodied in the application as described in the specification and/or illustrated in the drawings are illustrative only. Although exemplary embodiments of the invention have been described in detail in this patent document, those of ordinary skill in the art will readily appreciate that equivalents, modifications, variations, etc. to the subject matter of the exemplary embodiments and alternative embodiments are possible and are considered to be within the scope of the invention; all such subject matter (e.g., modifications, variations, embodiments, combinations, equivalents, etc.) is intended to be encompassed within the scope of the invention. It should also be noted that various/other modifications, variations, substitutions, equivalents, changes, omissions, and the like can be made in the configuration and/or arrangement of the exemplary embodiments (e.g., in terms of concepts, designs, structures, arrangements, forms, assemblies, constructions, means, functions, systems, processes/methods, steps, order of process/method steps, operations, operating conditions, performance, materials, compositions, combinations, etc.) without departing from the scope of the invention; and all such subject matter (e.g., modifications, variations, embodiments, combinations, equivalents, etc.) is intended to be included within the scope of the invention. The scope of the invention is not intended to be limited to the subject matter (e.g., the details, structures, functions, materials, acts, steps, sequences, systems, results, etc.) described in the specification and/or figures of this patent document. It is appropriate that the claims of this patent document be construed to cover the full breadth of the subject matter of the present application (e.g., including any and all such modifications, variations, embodiments, combinations, equivalents, etc.); it is to be understood that the terminology used in this patent document is intended to provide a description of the subject matter of the exemplary embodiments and is not intended to limit the scope of the present application.

It should also be noted that, in accordance with exemplary embodiments, the invention can comprise conventional techniques (e.g., techniques embodied in and/or integrated with, exemplary embodiments, modifications, variations, combinations, equivalents), or can comprise any other suitable technique (now and/or in the future) having the capability to perform the functions and processes/operations described in the specification and/or illustrated in the drawings. All such techniques, e.g., technologies implemented in examples, adaptations, variations, combinations, equivalents, etc., are considered to be within the scope of the invention of this patent document.

## Claims

1. An airbag device, comprising:
a first chamber;
a second chamber located outside the first chamber; wherein a communication channel is provided between the first chamber and the second chamber; and
a blocking assembly arranged in the first chamber and comprising a blocking body and a tether assembly; wherein a first end of the tether assembly is connected to the blocking body, and a second end is adapted to be released or restrained, so that the blocking body is adapted to block or open the communication channel;
wherein in a first operation mode, the second end of the tether assembly is released, the blocking body blocks the communication channel, the first chamber is separated from the second chamber, and only the first chamber is inflated; and
in a second operation mode, the second end of the tether assembly is restrained, the blocking body is pulled by the tether assembly to cause at least part of the blocking body to deviate from the communication channel, the communication channel is opened, and the first chamber and the second chamber are in communication and both inflated.

2. The airbag device according to claim 1, wherein the airbag device further comprises:
an airbag body defining an inflation space; and
at least one separator sheet, and wherein the separator sheet is arranged in the inflation space and connected to the airbag body to divide the inflation space into the first chamber and the second chamber, and the separator sheet is configured with a first communication opening used as the communication channel.

3. The airbag device according to claim 2, wherein the airbag body comprises a first airbag for forming the first chamber and a second airbag for forming the second chamber;
the first airbag comprises a mounting area used as the separator sheet, and the second airbag is configured with at least one second communication opening; and wherein the second airbag is arranged outside the first airbag and mounted on the mounting area, and the second communication opening is docked with the first communication opening.

4. The airbag device according to claim 3, wherein the first communication opening is within a range of the second communication opening.

5. The airbag device according to claim 2, wherein the airbag body is integrally formed, and the airbag body and the separator sheet are formed independently and assembled together.

6. The airbag device according to claim 2, wherein the airbag device further comprises a first connection structure, and the communication opening is within a range defined by the first connection structure; and wherein in the first operation mode, the first connection structure remains intact to connect the blocking body to the separator sheet, and in the second operation mode, the first connection structure is destroyed, and at least part of the blocking body is separated from the separator sheet and deviates from the first communication opening.

7. The airbag device according to claim 6, wherein the first connection structure is arranged along an edge of the first communication opening.

8. The airbag device according to claim 2, wherein the airbag device further comprises a second connection structure adapted to connect a wall of the second chamber to the separator sheet; and wherein in the first operation mode, the second connection structure remains intact and connects the wall of the second chamber to the separator sheet, and in the second operation mode, the second connection structure is destroyed, so that the first chamber and the second chamber are inflated.

9. The airbag device according to claim 8, wherein the second connection structure is further adapted to connect the wall of the second chamber and the blocking body to the separator sheet; and wherein in the first operation mode, the second connection structure remains intact and connects the wall of the second chamber and the blocking body to the separator sheet, and in the second operation mode, the second connection structure is destroyed, so that at least part of the blocking body deviates from the communication channel, and the first chamber and the second chamber are inflated.

10. The airbag device according to claim 2, wherein the airbag device further comprises a third connection structure offset from the first communication opening;
in the first operation mode and the second operation mode, the third connection structure remains intact and connects the blocking body to the separator sheet.

11. The airbag device according to claim 10, wherein the blocking body comprises a first edge portion and a second edge portion opposite to the first edge portion;
the third connection structure is arranged along the first edge portion, and the first end of the tether assembly is connected to the second edge portion.

12. The airbag device according to claim 10, wherein the third connection structure is arranged in a middle of the blocking body to divide the blocking body into two sub-sheets; and wherein at least two first communication openings are configured and correspond to the two sub-sheets respectively;
the tether assembly comprises two first ends which are respectively connected to the two sub-sheets.

13. The airbag device according to claim 2, wherein an elongation rate of the blocking body is equal to an elongation rate of the separator sheet.

14. The airbag device according to claim 1, wherein the airbag device further comprises an activation mechanism, and the second end of the tether assembly is adapted to be connected to the activation mechanism;
in the first operation mode, the activation mechanism is actuated to release the second end of the tether assembly, and in the second operation mode, the activation mechanism is unactuated to restrain the second end of the tether assembly.

15. The airbag device according to claim 14, wherein the tether assembly comprises:
a first tether connected to the blocking body; and
a second tether having a first end connected to the first tether and a second end adapted to be connected to the activation mechanism.

16. The airbag device according to claim 15, wherein the tether assembly comprises a plurality of first tethers, and the first end of the second tether is connected to the plurality of the first tethers.

17. The airbag device according to claim 2, wherein the airbag device further comprises two gas generators;
wherein in the first operation mode, one of the two gas generators inflates the airbag body; and
in the second operation mode, the two gas generators inflate the airbag body.

18. A method for controlling an airbag device, wherein the airbag device comprises a first chamber, a second chamber located outside the first chamber, and a blocking assembly; wherein a communication channel is provided between the first chamber and the second chamber; and wherein the blocking assembly is arranged in the first chamber and comprises a blocking body and a tether assembly, a first end of the tether assembly is connected to the blocking body, and a second end of the tether assembly is adapted to be released or restrained;
the method comprises:
obtaining a distance between an occupant and the airbag device;
determining whether the distance is greater than a preset distance; if not, the second end of the tether assembly is released, the blocking body blocks the communication channel, the first chamber is separated from the second chamber, and only the first chamber is inflated; and if so, the second end of the tether assembly is restrained, the blocking body is pulled by the tether assembly to cause at least part of the blocking body to deviate from the communication channel, the communication channel is open, and the first chamber and the second chamber are in communication and both inflated.

19. A vehicle, comprising the airbag device according to any one of claims 1 to 17.
